Europäisches Patentamt

European Patent Office

Office européen des brevets

(19)

(11) EP 1 547 980 A1

(12) EUROPEAN PATENT APPLICATION
published in accordance with Art. 158(3) EPC

(43) Date of publication:
29.06.2005 Bulletin 2005/26

(51) Int Cl.⁷: $C03B\ 27/044$

(21) Application number: 03797543.0

(86) International application number:
PCT/JP2003/011241

(22) Date of filing: 03.09.2003

(87) International publication number:
WO 2004/026777 (01.04.2004 Gazette 2004/14)

(84) Designated Contracting States:
AT BE BG CH CY CZ DE DK EE ES FI FR GB GR
HU IE IT LI LU MC NL PT RO SE SI SK TR

(30) Priority: 04.09.2002 JP 2002258355
26.08.2003 JP 2003301229

(71) Applicant: Central Glass Company, Limited
Ube-shi, Yamaguchi 755-0001 (JP)

(72) Inventors:
• TAMAI, Koji,
  Matsuzaka Plant Central Glass Co. Ltd
  Matsusaka-shi, Mie 515-0001 (JP)
• TAKAYAMA, Kazuyoshi
  Sendai-shi, Miyagi 982-0261 (JP)

(74) Representative:
Manitz, Finsterwald & Partner GbR
Martin-Greif-Strasse 1
80336 München (DE)

(54) THERMALLY TEMPERED GLASS, AND METHOD AND APPARATUS FOR MANUFACTUING THE GLASS

(57)    The invention relates, in case that a thermally tempered glass is produced by allowing an impact jet flow from quenching nozzles to blow against the glass, to a process for producing a curved shape, thermally tempered glass, **characterized in that** a quenching is conducted by simultaneously using at least two types of quenching nozzles having different exit diameters of the quenching nozzles. Furthermore, the invention relates to a curved, thermally tempered glass produced by this process and to an apparatus for producing the thermally tempered glass. In the invention, it is preferable that a exit diameter d is from $\phi$1mm to $\phi$8mm, a distance Z between the nozzle and the glass is 1 to 80mm, a chamber pressure P is in a range of 0.1 to 0.8MPa, and a heat flux difference is 150kW/m² or less. Furthermore, in the thermally tempered glass, it is preferable that a difference of surface compressive stress values within a glass surface is 20MPa or less.

FIG. 3A

EP 1 547 980 A1

## Description

<u>BACKGROUND OF THE INVENTION</u>

The present invention relates to so-called thermally tempered glasses produced by air-quench method, particularly thermally-tempered curved glasses of thicknesses of 2.5mm or less, their production process and their production apparatus.

From the viewpoint of resource saving and energy saving, there is a progress to make thermally tempered glasses have thinner thicknesses and greater degrees of tempering. As means for this, chemical strengthening method and physical tempering method are mainly used. Chemical strengthening method is a method in which the glass surface is provided with a compressive stress by using ion exchange, crystallization, the difference in thermal expansion coefficient, etc., and tempered glasses by that method are called chemically strengthened glasses. Chemical strengthening method is suitable for strengthening thin plates having plate thicknesses of 3mm or less, particularly 2mm or less. Since the thickness of the compressive stress layer of chemically strengthened glasses is very thin, a problem of scratch strength tends to occur. Therefore, there is a defect that the location for its use is limited.

In contrast with this, as tempered glasses by physical tempering method are also called thermally tempered glasses, they are produced by quenching a glass heated near to the softening point, from its surface. In the case of thermally tempered glass, it has a compressive stress layer that is about 1/6 of the plate thickness and therefore has an advantage that a problem of scratch strength does not tend to occur. As production process of thermally tempered glasses, there are many uses of so-called air-quench tempering method using the air as a quenching medium from the reasons in terms of the production cost and safety, and thermally tempered glasses produced are also called air-quench tempered glasses.

Thermally tempered glass is produced by using the temperature difference and the viscous flow within the glass after heating in a furnace. Therefore, in case that a thermally tempered glass is increased in the degree of tempering, it is known that the following two methods are mainly used. One is to increase as high as possible the glass temperature at the time of the quenching starts. Another is to have a greater temperature difference between the surface layer and the inner layer upon quenching.

By having a higher glass temperature at the start of the quenching, it is possible to increase the degree of tempering and to produce tempered glasses of thin plates. Furthermore, it is possible to have less glass failure during the production. However, when the glass temperature is too high, the glass deforms, and there occurs a critical problem in which a predetermined shape cannot be obtained. Therefore, in the case of increasing the degree of tempering of tempered glasses, only a method for making the glass temperature higher has a limitation.

On the other hand, with respect to having a greater glass inside temperature difference between the surface layer and the inner layer upon quenching, it can be explained by the concept of making Biot's number greater. Biot's number is a dimensionless number represented by ((heat transfer coefficient)x(plate thickness) /(heat conductivity)). It is possible to increase the glass tempering degree by making this Biot's number greater. That is, it is possible to increase the glass tempering degree by having a greater heat transfer coefficient, a greater plate thickness and a less heat conductivity. However, in the case of having a less plate thickness of a tempered glass, that is, in the case of producing a thin plate tempered glass, since heat conductivity of glass is constant in general, it is necessary to make heat transfer coefficient greater in order to make the numerator of Biot's number greater. Therefore, in the case of producing a thin glass plate, a method of making heat transfer coefficient greater is a main countermeasure.

In quenching using nozzle, relationships are experimentally found between heat transfer coefficient and its quenching condition (for example, see R.Gardon and J.Cobonpue, Heat Transfer between a Flat Plate and Jets of Air Impinging on It, Int. Develop Heat Transfer, ASME (1962), pp454-460), such as:

$$(h \cdot r_n)/\lambda = 0.286 Re^{0.625}$$

$$Re = (Vg \cdot r_n)/\nu$$

$$Vg = 6.63 V_n \cdot d/Z.$$

Where, h is heat transfer coefficient, $\lambda$ is heat conductivity of the air, $\nu$ is coefficient of kinematic viscosity of the air, Re is Reynolds number, $r_n$ is the distance between nozzles, d is the nozzle diameter at the nozzle exit, Vn is flow rate at the nozzle exit, Vg is flow rate on the glass surface, and Z is the distance between the nozzle and the glass. The above-mentioned numerical values exist in case that Z/d is greater than 8. However, as shown from the forms of the above formulas, as a general method for having a greater heat-transfer coefficient, it is effective to make the distance between the glass and the nozzle exit shorter, to achieve the energy increase upon impingement of the quenching air, etc., as well as to have a greater jet rate from the nozzle (to have a greater jet pressure from the nozzle), to have a greater nozzle diameter, and to increase the number of nozzles.

The trend of resource saving and energy saving in tempered glass has another large trend of tempered glass shape complication. For example, as the trend of having a more streamlined automobile shape progresses in order to lower the automobile fuel consumption, and there is a demand for tempered glasses to fit to such shapes. This movement progresses in many fields, not only in automobile, but also in electric train, airplanes, etc. To satisfy a more streamlined shape, there is a demand of making the tempered glass shape more complex. We are in a condition that this demand must also be satisfied. However, it is not easy to satisfy this demand. In particular, in a greatly curved glass, it is very difficult to obtain a predetermined degree of tempering at around its curved portions. Furthermore, as mentioned above, it is a very difficult technique to satisfy this, since there is also a demand for thinner plate tempered glasses.

In view of prior art, there are disclosed proposals, such as adjusting the glass temperature in the direction along the plate width by an exhaust air used in quenching (e.g., see Japanese Patent Laid-open Publication 2001-48561), being characterized in the use of a tapered nozzle (e.g., see Japanese Patent Examined Publication 6-76223), being equipped with first group nozzles jetting a blower air and second group nozzles jetting a compressed air (e.g., Japanese Patent Laid-open Publication 2001-26434), making a device to conform to a curved plate glass, of which shape changes (e.g., see Japanese Patent Laid-open Publication 7-29164), and limiting the width of a band-like region, the maximum principal stress difference, the average surface compressive stress, etc. (e.g., see Japanese Patent Laid-open Publication 11-199257). Furthermore, the present applicant has shown a thermal tempering method by a shock tube like use (e.g., see Japanese Patent Laid-open Publication 62-158128).

SUMMARY OF THE INVENTION

In the case of producing thermally tempered glasses of thicknesses of 2.5mm or less, particularly thin-plate tempered glasses of thicknesses of 2.3mm or less, it is difficult to say that production processes of thermally tempered glasses are established by conventional methods of increasing glass temperature upon tempering and/or methods of obtaining large heat transfer coefficients. Therefore, we are in a condition that desired thermally tempered glasses cannot be obtained. In particular, in the case of thermally tempered glasses in the form of curved thin plate, this trend is outstanding.

That is, as a method for increasing heat transfer coefficient, it is effective to shorten the distance between the glass and the nozzle exit, to increase the impact energy of a quenching medium, etc., as well as to increase the jetting speed from the nozzles (to increase the jetting pressure from the nozzles), to enlarge the nozzle diameter, and to increase the number of nozzles. However, a method of increasing the jetting speed from the nozzles or shortening the distance to the glass causes jetting marks of the nozzles on the glass, resulting in an optical problem. By a method of enlarging the nozzle diameter or increasing the number of the nozzles, it is not possible to well manage the airflow after its impingement against glass, since the cross-sectional area occupied by the nozzles increases. As a result, it is not possible to obtain a large heat transfer coefficient. Furthermore, it is not practical to use a quenching medium other than the air in view of the production cost. It is also limited to increase the glass temperature at the start of the quenching.

It is not possible to retain a sufficient glass temperature by a method disclosed in Japanese Patent Laid-open Publication 2001-48561. Furthermore, it is not possible to obtain a large heat transfer coefficient even by methods disclosed in Japanese Patent Examined Publication 6-76223 and Japanese Patent Laid-open Publication 2001-26434. It is not possible to obtain the above-mentioned thin-plate tempered glass even by the method disclosed in Japanese Patent Laid-open Publication 7-29164, and in some cases the degree of tempering even lowers. Furthermore, it is substantially impossible to apply the method disclosed in Japanese Patent Laid-open Publication 11-199257 to curved tempered glasses.

In view of the above-mentioned problems, the present invention provides a thin-plate tempered glass, its tempering process and tempering apparatus under a new concept. That is, the present invention provides, in case that a thermally tempered glass is produced by allowing an impact jet flow from a quenching nozzle to blow against the glass, a process for producing a curved, thermally tempered glass, in which a quenching is conducted by simultaneously using at least two types of quenching nozzles having different exit diameters of the quenching nozzles.

Furthermore, the present invention provides a curved, thermally tempered glass produced by the above process.

Still furthermore, the present invention provides a production process of the above thermally tempered glass.

The present inventors found that the conventional heat transfer concept must partially be modified and developed a new production process of tempered glasses based on this modified concept, as a result of a detailed examination on the flow of the air jetted from the nozzles used in producing tempered glasses. That is, we have found that the relationship between the jet flow from the quenching nozzles and the heat transfer coefficient is not so simple as discussed conventionally, but is a complicated phenomenon that is influenced by the nozzle exit diameter and shape, the impact jet flow pressure, the distance between the nozzle exit and glass, etc. With this, it was made possible by means meeting this phenomenon to produce curved, thin-plate tempered glasses of a thickness of 2.5mm or less that had been considered to be difficult. In particular, it is effective for curved, thin-plate tempered glasses of a thickness of 2.3mm or less, of which production has been extremely difficult so far.

It was made possible by the present invention to stably produce thin-plate tempered glasses of thicknesses of 2.5mm or less that had been difficult, particularly curved tempered glasses of 2.3mm or less.

BRIEF DESCRIPTION OF THE DRAWINGS

Fig. 1 is a conceptual view showing the change of heat transfer coefficient of an underexpansion jet flow.

Fig. 2A is a conceptual view (side view) showing a nozzle shape of Example 1 and Comparative Example 1.

Fig. 2B is a view similar to Fig. 2A, but is its front view.

Fig. 3A is a conceptual view (general view) showing a quenching apparatus of Example 1, in which at least two types of quenching nozzles of different exit diameters are arranged.

Fig. 3B is an enlarged view showing a broken line portion of Fig. 3A.

Fig. 4A is a conceptual view (general view) showing a quenching apparatus of Comparative Example 1, in which quenching nozzles of the same exit diameter are arranged.

Fig. 4B is an enlarged view showing a broken line portion of Fig. 4A.

Fig. 5A is a conceptual view (general view) showing a quenching apparatus of Example 4, in which at least two types of quenching nozzles of different exit diameters are arranged.

Fig. 5B is an enlarged view showing a dotted line portion of Fig. 5A.

Fig. 6 is a distribution chart showing heat flux measurement results from the quenching nozzles under a condition that the nozzle exit diameter is $\phi 8$ and the chamber pressure is 0.65MPa.

Fig. 7 is a distribution chart showing heat flux measurement results from the quenching nozzles under a condition that the nozzle exit diameter is $\phi 4$ and the chamber pressure is 0.3MPa.

Fig. 8 is a distribution chart showing heat flux measurement results from the quenching nozzles under a condition that the nozzle exit diameter is $\phi 1$ and the chamber pressure is 0.65MPa.

DESCRIPTION OF THE PREFERRED EMBODIMENTS

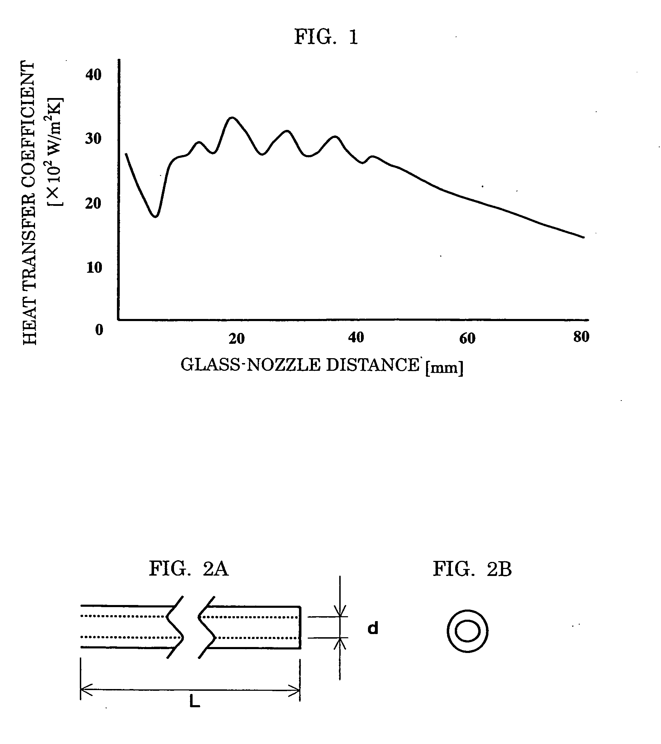

In Fig. 1 to Fig. 8, the reference numerals and reference signs 1, 2, 3, 4, L and d respectively represent a quenching nozzle, a quenching nozzle, a blast head, a quenching nozzle, length of a nozzle, and inner diameter of a nozzle.

As shown in Fig. 1, when a high-pressure air is allowed to flow through an elongated thin nozzle, an underexpansion jet flow occurs under some conditions. With this, the impact pressure changes and heat transfer coefficient changes depending on the difference of the distance between the nozzles and the impact surface of the glass plate surface.

The present invention is a process for producing a curved, thermally tempered glass, in which a quenching is conducted by simultaneously using at least two types of quenching nozzles having different exit diameters of the quenching nozzles, in case that thermally tempered glasses are produced by allowing the impact jet flow from the quenching nozzles to blow against glass. It is not possible to obtain superior tempered glasses by only changing the nozzle length relative to curved glasses and by using nozzles of only one exit diameter type as conducted hitherto.

Furthermore, it is preferable that the exit diameter d of quenching nozzle is from $\phi 1$mm to $\phi 8$mm, that the distance Z between quenching nozzles and glass is from 1mm to 80mm, and that the pressure P of a chamber communicating with the quenching nozzle is from 0.1MPa to 0.8MPa. Herein, the exit diameter d of quenching nozzle refers to the diameter at the exit of the nozzle.

If the exit diameter d of the quenching nozzle is less than $\phi 1$mm, it is necessary to provide many nozzles for maintaining its quenching capability. Therefore, its management becomes difficult. On the other hand, the exit diameter d of the quenching nozzle exceeds $\phi 8$mm, the quenching capability tends to lower, and it becomes difficult to conduct a uniform quenching. More preferably, it is from $\phi 2$mm to $\phi 6$mm.

It is preferable that the distance Z between the quenching nozzles and the glass is from 1mm to 80mm. If the distance Z between the quenching nozzles and the glass is less than 1mm, marks of the impact jet flow ejected from the nozzle remain. On the other hand, if it exceeds 80mm, it is not possible to obtain a tempered glass of a thin plate thickness. More preferably, it is from 3mm to 50mm. The distance Z between the glass quenching nozzles and the glass refers to the distance between the nozzle exit and the glass plate.

The quenching nozzles are connected with a chamber generally called a blast head. Upstream of the chamber, a compressor or high-pressure blower is provided. It is preferable that the pressure P of the chamber connected to the quenching nozzles is from 0.1MPa to 0.8MPa. If the pressure P of the chamber connected to the quenching nozzles is lower than 0.1MPa, it is difficult to obtain a thermally tempered glass of a thickness of 2.5mm or less. On the other hand, it is difficult to obtain a pressure exceeding 0.8Pa by a normal apparatus, resulting in a large cost increase. Preferably it is from 0.2MPa to 0.75MPa.

It is preferable to adjust the heat flux difference within the glass surface to 150kW/m$^2$ by properly chang-

ing the distance Z between nozzle and glass, the pressure P of the chamber communicating with the quenching nozzles, and the diameter d of the quenching nozzle. If it exceeds 150kW/m$^2$, the resulting thermally tempered glass becomes low in uniformity. With this, there may occur problems at a breaking test, for example, the maximum value of breaking at a breaking start point is over, and in contrast the minimum value tends to become too small at another breaking start point. Furthermore, there may occur dangerous sharp pieces called splines.

It is preferable to set the distance Z between quenching nozzle and glass, the pressure P of impact jet flow, and the quenching nozzle diameter d such that the difference of the surface compressive stress values of a thermally tempered glass is 20MPa or less. If the difference of the surface compressive stress values of a thermally tempered glass exceeds 20MPa, the resulting thermally tempered glass becomes low in uniformity. It is often to adjust heat flux upon quenching to 150kW/m$^2$ or less under a normal production condition in order to adjust the difference of the surface compressive stress values of a thermally tempered glass to 20MPa or less. However, in case that the glass temperature upon quenching start is low, it is preferable to provide a difference smaller than the above-mentioned value.

Furthermore, it is a curved, thermally tempered glass produced by either of the above-mentioned processes. This thermally tempered glass is 2.5mm or less that has been extremely difficult hitherto. Furthermore, it is possible to produce a curved, thermally tempered glass of 2.3mm or less.

It is preferable that the difference between the surface compressive stress values within the glass surface is 20MPa or less. If it is less than this value, it is uniform as a thermally tempered glass, and it does not become a serious problem against various loads.

Still furthermore, it is preferable that at least two types of quenching nozzles, of which exit diameter d is from $\phi$1mm to $\phi$8mm, are simultaneously provided, that there is provided a system controlled in a manner that the pressure P of the chamber communicating with the quenching nozzles is from 0.1MPa to 0.8MPa, and that there is provided a production apparatus of curved, thermally tempered glasses using quenching nozzles that is capable of adjusting the distance Z between quenching nozzle and glass to 1mm to 80mm. According to the present apparatus, it is decided by overall judging the pressure P of the impact jet flow from the quenching nozzles, the distance Z between quenching nozzle and glass, and the exit diameter d of at least two types of quenching nozzles that is from $\phi$1mm to $\phi$8mm.

Furthermore, it is preferable to arrange quenching nozzles of different exit diameters at a curved-region forming portion and a flat region-forming portion such that the difference between the surface compressive stress values within the glass surface becomes 20MPa or less. In many cases in the curved region-forming portion, it is difficult to put compressive stress. Therefore, it is necessary to make heat flux greater than that of the flat region portion. With this, to be a production apparatus of thermally tempered glasses, in which quenching nozzles of different exit diameters can be arranged, is preferable.

Furthermore, to be a production apparatus of thermally tempered glasses, in which at least two types of quenching nozzles of different exit diameters are arranged, is preferable. The thinner the glass plate is more difficult to uniform quenching. Therefore, a production apparatus of thermally tempered glasses, in which at least two types of quenching nozzles can be combined even in the flat region portion, is preferable.

Furthermore, when described in detail, it is necessary to provide two types of quenching nozzles having exit diameters that are different by 10% at the minimum in opening area. On the other hand, its upper limit is 500% in opening area. Desirably, it is preferable to use quenching nozzles that are different by 20% to 300% in opening area. It becomes important to appropriately arrange nozzles of a large heat transfer coefficient and nozzles of a heat transfer coefficient smaller than that by suitably selecting the nozzle inner diameter, the nozzle length, the distance between nozzle and the impact surface of the glass plate surface, and the pressure of the impact jet flow. In general, nozzles of a large heat transfer coefficient are used at a place that requires a large quenching capacity, for example, a sharply curved place. It is preferable that the impact jet flow is underexpansion jet flow. To be underexpansion jet flow is important to increase heat transfer coefficient.

In arranging the quenching nozzles, it is also necessary to consider the temperature distribution within the glass surface besides the degree of curvature. This is because it is always true to have uneven temperature of the glass surface even if the heating is conducted under similar conditions. In general, it is possible to obtain uniform thermally tempered glasses with a greater number of types of the quenching nozzles. However, the nozzle arrangement and the quenching condition are limited contrary. It is thus necessary to overall consider not only the shape and plate thickness of the target thermally tempered glass, but also the facility specification, quenching condition, etc.

Although the quenching nozzle preferably has a general thin shape, for example, it may be a nozzle, of which inner diameter changes, as Laval nozzle. However, in case that its inner diameter changes greatly, it results in a condition similar to that wherein a large diameter nozzle is used. Thus, it is not efficient in view of the airflow after quenching.

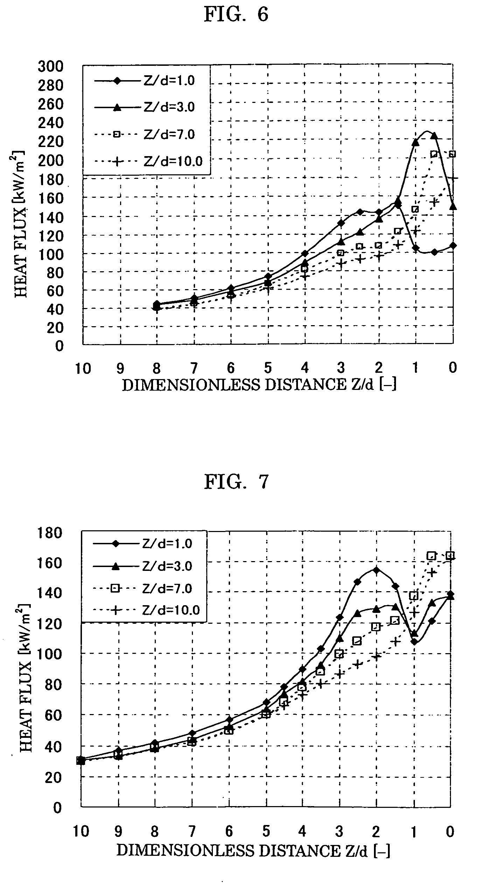

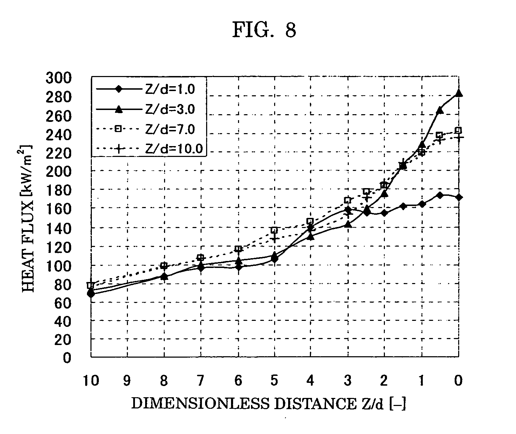

Fig. 6 shows heat flux measurement results from the quenching nozzles under a condition that the nozzle diameter is $\phi$8 and the chamber pressure is 0.65MPa. Fig. 7 shows heat flux measurement results from the quenching nozzles under a condition that the nozzle diameter is $\phi$4 and the chamber pressure is 0.3MPa. Fig. 8 shows an example of heat flux measurement results from the quenching nozzles under a condition that the nozzle diameter is $\phi 1$ and the chamber pressure is 0.65MPa. In either of them, the vertical axis refers to heat flux, and the horizontal axis refers to dimensionless distance obtained by dividing the distance between glass and nozzle by the exit diameter d of quenching nozzle.

In such manner, the heat flux value changes complicatedly by various conditions. Heat transfer coefficient and impact pressure change by the difference of distance between the nozzle exit emitted the air and the impact surface of the glass surface, and the phenomena of both are completely different by the pressure in the chamber. That is, in the case of underexpansion jet flow, even if the distance to the impact surface is shortened, heat transfer coefficient does not necessarily improve. In some cases, it improves by the enlargement. Even if the pressure in the chamber is increased, an adverse effect may be caused depending on the distance to the impact surface of the glass.

As a method for determining the degree of tempering of thermally tempered glasses, there is widely proposed a method of which estimation is conducted from breaking test (JIS R3205) and surface compressive stress (JIS R3222). In breaking test, the number of breakings in a 5cm square is expressed as the fragment density. In case that a fragment is in a 5cm square, it is counted as 1. In case that it is on the side, 0.5 is taken. The greater the fragment density, the greater the degree of tempering. In the case of a normal thermally-tempered glass, the fragment density is required to be from 40 to 400. If it exceeds 400, although it is placed outside of the category of general thermally-tempered glasses, it may be used as a super-tempered glass in some cases. Although the value of the surface compressive stress of tempered glass is not limited, a tempered glass with a higher degree of tempering generally has a greater value of the surface compressive stress.

It is necessary that the difference of the surface compressive stresses in a thermally-tempered glass surface is 20MPa or less. If the difference of the surface compressive stresses in a thermally-tempered glass surface exceeds 20MPa, the variation of fragment density in the tempered glass becomes greater, and there occur many cases in which the specifications of tempered glasses are not satisfied. Preferably, it is 15MPa or less. Since the nozzle length also has an influence less than the above-mentioned factors, it is preferably in a range of 50-250mm.

In the following, the present invention is explained in detail by examples, but the present invention is not limited to these examples.

[Example 1]

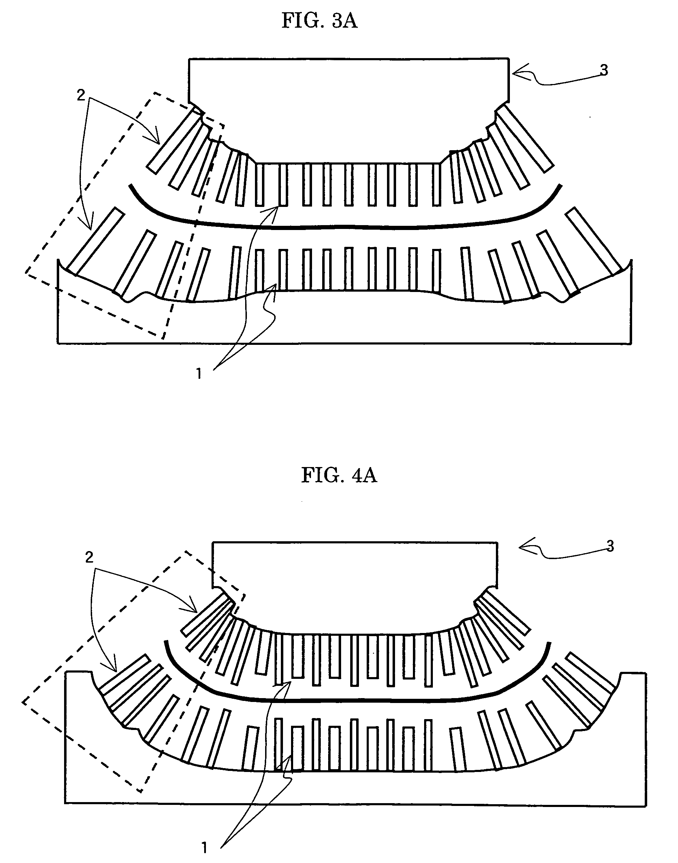

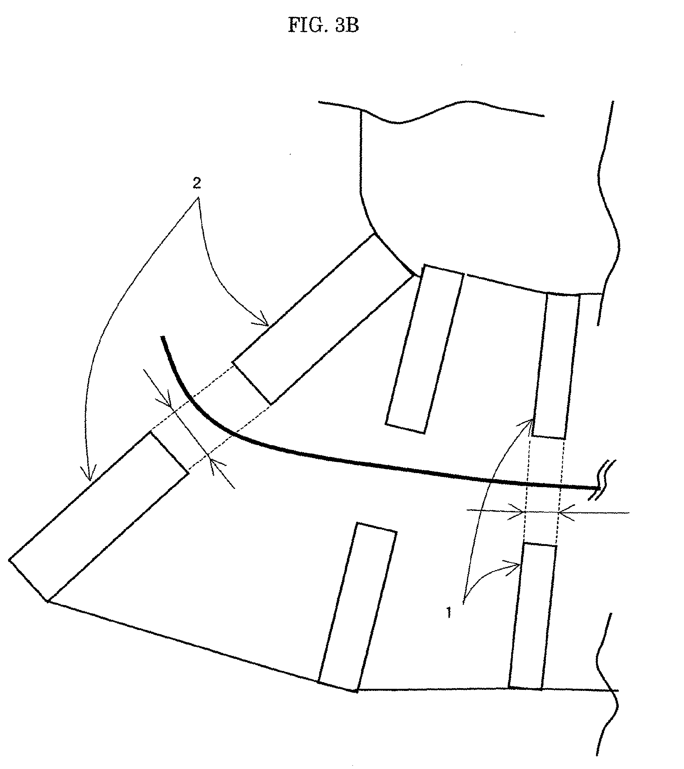

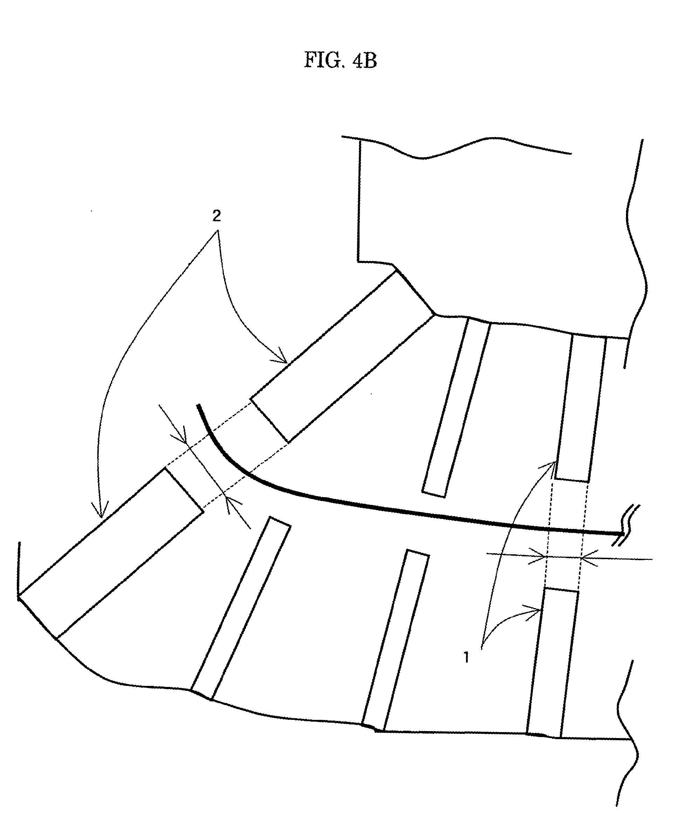

There was prepared a curved 2.3mm thick glass having dimensions of 490x820 (mm). As shown in Figs. 3A and 3B, a thermally tempered glass was produced by using a nozzle 1 group of a shape shown in Figs. 2A and 2B having an inner diameter d of 3mm and a length L of 100mm for a relatively flat region forming portion and by using a nozzle 2 group of a shape shown in Figs. 2A and 2B having an inner diameter d of 4mm and a length L of 100-130mm for a curved region forming portion (curved surface radius: ~500mm). Each nozzle communicates with a high-pressure air supply apparatus through a blast head 3. The distance between glass and nozzle upon this was based on about 30mm, and the chamber pressure was adjusted to 0.4MPa.

As a result of an air-quench tempering treatment under this quenching condition, the fragment density (the number/25 cm$^2$) at the relatively flat region forming portion was about 100, and that even at the curved region forming portion was about 60. This result meets the specification as a tempered glass. When the surface compressive stress of this tempered glass was measured, it was 90MPa at a place where the maximum value was obtained and 80MPa even at a place where the minimum value was obtained. The difference was 10MPa.

[Example 2]

There was prepared a curved 2.3mm thick glass having dimensions of 490x820 (mm). A thermally tempered glass was produced by using a nozzle group having an inner diameter of 3mm and a length of 100mm for a relatively flat region forming portion and by using a nozzle group having an inner diameter of 4mm and a length of 150-200mm for a curved region forming portion (curved surface radius: ~250mm). The distance between glass and nozzle upon this was based on about 25mm, and the chamber pressure was adjusted to 0.5MPa.

As a result of an air-quench tempering treatment under this quenching condition, the fragment density (the number/25 cm$^2$) at the relatively flat region forming portion was about 350, and that even at the curved region forming portion was about 250. This result meets the specification as a tempered glass. When the surface compressive stress of this tempered glass was measured, it was 135MPa at a place where the maximum value was obtained and 120MPa even at a place where the minimum value was obtained. The difference was 15MPa.

[Example 3]

There was prepared a curved 2.3mm thick glass having dimensions of 540x1150 (mm). A thermally tempered glass was produced by using a nozzle group having an inner diameter of 2.5mm and a length of 100mm for a relatively flat region forming portion, by using a nozzle group having an inner diameter 3mm and a length of 150-200mm for a curved region forming portion A (curved surface radius: ~500mm), and by using a nozzle group having an inner diameter of 4mm and a length of 150-200mm for a curved region forming portion B (curved surface radius: ~250mm). The distance between glass and nozzle upon this was based on about 25mm, and the chamber pressure was adjusted to 0.55MPa.

As a result of an air-quench tempering treatment under this quenching condition, the fragment density (the number/25 cm$^2$) at the relatively flat region forming portion was about 150, and that even at the curved region forming portion was about 80. This result meets the specification as a tempered glass. When the surface compressive stress of this tempered glass was measured, it was 100MPa at a place where the maximum value was obtained and 90MPa even at a place where the minimum value was obtained. The difference was 10MPa.

[Example 4]

In order to thermally temper a curved 1.8mm thick glass having dimensions of 540x1150 (mm), as shown in Figs. 4A and 4B, there was used a quenching apparatus having different nozzle exit diameters and different nozzle lengths. A thermally tempered glass was produced by using a nozzle group having exit diameters of 3mm and 5mm for a relatively flat region forming portion, by using a nozzle group having exit diameters of 2.5mm and 4mm for a curved region forming portion A (curved surface radius: ~500mm), and by using a nozzle group having exit diameters of 2mm, 3mm and 4mm for a curved region forming portion B (curved surface radius: ~250mm). The pressure of impact jet flow upon this was 0.4MPa at the relatively flat region forming portion, 0.5MPa at the curved region forming portion A, and 0.65MPa at the curved region forming portion B. The distance Z between glass and nozzle was based on 20mm in the case of the nozzle (exit diameter: 3mm) and 25mm in the case of the nozzle (exit diameter: 5mm) of the flat region forming portion, on 16mm in the case of the nozzle (exit diameter: 2.5mm) and 18mm in the case of the nozzle (exit diameter: 4mm) of the curved region forming portion A, and on 16mm in the case of the nozzle (exit diameter: 2mm), 20mm in the case of the nozzle (exit diameter: 3mm) and 24mm in the case of the nozzle (exit diameter: 4mm) of the curved region forming portion B.

As a result of an air-quench tempering treatment of the above-mentioned quenching apparatus under a heating condition where the furnace temperature was 680°C and the furnace time was 180 seconds, the fragment density (the number/25 cm$^2$) was about 160 at the relatively flat region forming portion and about 100 even at the curved region forming portion. This result meets the specification as a tempered glass. When the surface compressive stress of this tempered glass was measured, it was 100MPa at a place where the maximum value was obtained and 90MPa even at a place where the minimum value was obtained. The difference was 10MPa.

(Comparative Example 1)

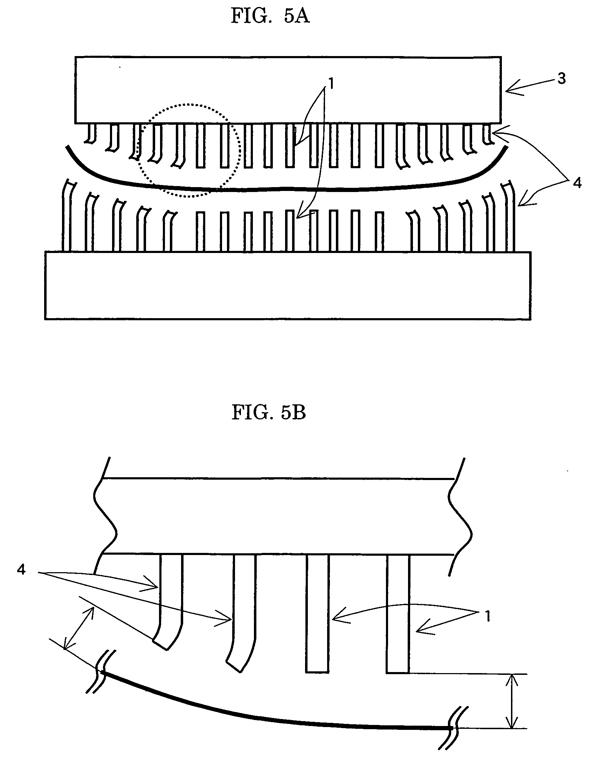

There was prepared a curved 2.3mm thick glass (curved surface radius: ~500mm) having dimensions of 490x820 (mm). As shown in Figs. 5A and 5B, a thermally tempered glass was produced by uniformly arranging a nozzle 1 group (inner diameter d: 3mm; length L: 100mm) having a shape shown in Figs. 2A and 2B. Upon this, nozzles 4 having bent ends were used for the curvature-forming portion. Each nozzle communicates with a high-pressure air supply apparatus through a blast head 3. The distance between glass and nozzle was based on 30mm, and the chamber pressure was adjusted to 0.4MPa.

In case that an air-quench tempering treatment was conducted on the 2.3mm thick glass under this quenching condition, the fragment density (the number/25 cm$^2$) at the relatively flat region forming portion was about 100, and that at the curved region forming portion was 45. Therefore, the specification as a thermally tempered glass could not be satisfied. When the surface compressive stress of this tempered glass was measured, it was 90MPa at a place where the maximum value was obtained and 65MPa even at a place where the minimum value was obtained. The difference was 25MPa.

(Comparative Example 2)

There was prepared a curved 2.3mm thick glass (curved surface radius: ~250mm) having dimensions of 490x820 (mm). A thermally tempered glass was produced by using only a nozzle group (inner diameter: 3mm; length: 100mm). The distance between glass and nozzle upon this was based on 25mm, and the chamber pressure was adjusted to 0.5MPa.

As a result of an air-quench tempering treatment under this quenching condition, the fragment density (the number/25 cm$^2$) at the relatively flat region forming portion was about 330, and that at the curved region forming portion was about 80. However, when a breaking starting point was set at a center portion, a spline having a length of 80mm occurred near to the curvature forming portion. Therefore, it was necessary to consider that the specification as a thermally tempered glass was not satisfied. When the surface compressive stress of this tempered glass was measured, it was 135MPa at a place where the maximum value was obtained and 110MPa even at a place where the minimum value was obtained. The difference was 25MPa.

(Comparative Example 3)

There was prepared a curved 2.3mm thick glass (having a curved region forming portion A (curved surface radius: ~500mm) and a curved region forming portion B (curved surface radius: ~250mm)) having dimensions of 540x1150 (mm). A tempered glass was produced by using only a nozzle group (inner diameter: 2.5mm; length: 100mm). The distance between glass and nozzle upon this was based on 25mm, and the chamber pressure was adjusted to 0.55MPa.

As a result of an air-quench tempering treatment under this quenching condition, only 40 was obtained at the curved region forming portion. Therefore, the production was conducted by raising the chamber pressure to 0.65MPa.

As a result of this, a fragment density of about 60 was obtained even at the curved region forming portion. However, dimples remained on the glass as a result of raising the pressure. Thus, the specification as a tempered glass in terms of optical characteristics was not satisfied. When the surface compressive stress of this tempered glass was measured, it was 110MPa at a place where the maximum value was obtained and 80MPa even at a place where the minimum value was obtained. The difference was 30MPa.

(Comparative Example 4)

A 1.8mm thick glass having dimensions of 540x1150 (mm) was prepared. The production of a thermally tempered glass, similar to that of Example 4, was tried under a condition that all of the quenching nozzles were adjusted to have an exit diameter of 3mm, a distance between nozzle and glass of 40mm, and an impact jet flow pressure of 0.4MPa.

However, even if the breaking test was conducted, a fragmentation phenomenon was not shown, as in a non-tempered glass. Therefore, the impact jet flow pressure was raised to 0.6MPa, and the distance between nozzle and glass was shortened to 20mm. As a result of this, a fragmentation phenomenon was shown at the flat region. However, a coarse breaking portion (fragment density: 12) occurred at the curved region forming portion B. Furthermore, as the entirety was reviewed, the fragment density varied greatly from ten-odd to 80.

Regarding the surface compressive stress of glass, a surface stress meter made by Toshiba Glass Co. was used. The quenching starting temperature in the production of a thermally tempered glass was set to 680°C.

As shown by the above results, a high value in jet pressure from nozzle and a short distance between nozzle and glass do not necessarily raise heat transfer coefficient, and it was extremely difficult to produce curved thin-plate tempered glasses with high quality. However, the production of curved, thin-plate tempered glasses was made possible under the condition of the present invention, and the production yield also became stable. The fact that the jet flow itself was an underexpansion jet flow in the examples was confirmed by visualization using a double exposure holographic interferometry.

**Claims**

1. In case that a thermally tempered glass is produced by allowing an impact jet flow from quenching nozzles to blow against the glass, a process for producing a curved, thermally tempered glass, **characterized in that** a quenching is conducted by simultaneously using at least two types of quenching nozzles having different exit diameters of the quenching nozzles.

2. A process for producing a curved, thermally tempered glass according to claim 1, **characterized in that** an exit diameter d of the quenching nozzle is from $\phi$1mm to $\phi$8mm, that a distance Z between the quenching nozzle and the glass is from 1mm to 80mm, and that a pressure P of a chamber communicating with the quenching nozzle is from 0.1 to 0.8MPa.

3. A process for producing a curved, thermally tempered glass according to claim 1 or claim 2, **characterized in that** a heat flux difference within a glass surface is adjusted to 150kW/m² or less by properly changing a distance Z between the nozzle and the glass, a pressure P of a chamber, and a diameter d of the quenching nozzle.

4. A process for producing a curved, thermally tempered glass according to any one of claims 1 to 3, **characterized in that** a distance Z between the quenching nozzle and the glass, a pressure P of a chamber, and a diameter d of the quenching nozzle are set, thereby adjusting a difference of surface compressive stress values of the thermally tempered glass to 20MPa or less.

5. A curved, thermally tempered glass **characterized in that** it has been produced by any one process of claims 1 to 4.

6. A curved, thermally tempered glass according to claim 5, **characterized in that** a difference of surface compressive stress values within a glass surface

7. An apparatus for producing a curved, thermally tempered glass according to claim 5 or claim 6, **characterized in that** it is simultaneously provided with at least two kinds of quenching nozzles having an exit diameter D of $\phi$1mm to $\phi$8mm, that it has a system controlled to make a chamber pressure P have a value of 0.1MPa to 0.8MPa, and that it uses a quenching nozzle capable of adjusting a distance Z between the quenching nozzle and the glass to a range of 1-80mm.

**8.** An apparatus for producing a curved, thermally tempered glass according to claim 7, **characterized in that** quenching nozzles having different exit diameters are arranged at a curved region forming portion and a flat region forming portion, thereby adjusting a difference of surface compressive stress values within a glass surface to 20MPa or less.

**9.** An apparatus for producing a curved, thermally tempered glass according to claim 7, **characterized in that** at least two kinds of quenching nozzles of different exit diameters are arranged, thereby adjusting a difference of surface compressive stress values within a glass surface to 20MPa or less.

EP 1 547 980 A1

## FIG. 1

## FIG. 2A   FIG. 2B

FIG. 3A

FIG. 4A

FIG. 3B

FIG. 4B

EP 1 547 980 A1

FIG. 5A

FIG. 5B

FIG. 6

FIG. 7

FIG. 8

## INTERNATIONAL SEARCH REPORT

| International application No. |
| --- |
| PCT/JP03/11241 |

A. CLASSIFICATION OF SUBJECT MATTER
  Int.Cl⁷  C03B27/044

According to International Patent Classification (IPC) or to both national classification and IPC

B. FIELDS SEARCHED

Minimum documentation searched (classification system followed by classification symbols)
  Int.Cl⁷  C03B23/00-35/26

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | EP 1069085 A2  (NIPPON SHEET GLASS CO., LTD.),<br>17 January, 2001 (17.01.01),<br>Column 14, line 43 to column 18, line 11;<br>column 3, line 24 to column 4, line 6; column 9,<br>line 58 to column 10, line 13<br>& JP 2001-26434 A<br>Page 2, column 1, lines 1 to 18; page 3, column 3,<br>lines 10 to 40; page 5, column 7, lines 20 to 30 | 1-9<br>1-9 |
| Y | Microfilm of the specification and drawings<br>annexed to the request of Japanese Utility Model<br>Application No. 10319/1989(Laid-open No.<br>102436/1990)<br>(NIPPON SHEET GLASS CO., LTD.),<br>15 August, 1990 (15.08.90),<br>Page 1; Claims; page 7, refer to the paragraph<br>of "Effect of Device"<br>(Family: none) | 1-9 |

☒ Further documents are listed in the continuation of Box C.      ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>  20 January, 2004 (20.01.04) | Date of mailing of the international search report<br>  10 February, 2004 (10.02.04) |
| --- | --- |
| Name and mailing address of the ISA/<br>  Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/11241

C (Continuation). DOCUMENTS CONSIDERED TO BE RELEVANT

| Category* | Citation of document, with indication, where appropriate, of the relevant passages | Relevant to claim No. |
|---|---|---|
| Y | JP 61-197444 A (Asahi Glass Co., Ltd.),<br>01 September, 1986 (01.09.86),<br>Page 4, left column, table 2<br>(Family: none) | 1-9 |
| A | JP 58-88132 A (NIPPON SHEET GLASS CO., LTD.),<br>26 May, 1983 (26.05.83),<br>Full text<br>(Family: none) | 1-9 |
| A | JP 3-271128 A (Central Glass Co., Ltd.),<br>03 December, 1991 (03.12.91),<br>Full text<br>(Family: none) | 1-9 |

Form PCT/ISA/210 (continuation of second sheet) (July 1998)